# FASCICULE DE BREVET EUROPEEN

(11) **EP 3 379 143 B1**
(45) Date de publication et mention de la délivrance du brevet: **16.04.2025**
(21) Numéro de dépôt: 18162952.8
(22) Date de dépôt: 20.03.2018
(51) Int. Cl.: F21S 41/143, F21S 41/26, F21S 41/275

(54) **MODULE LUMINEUX AVEC CORRECTION DE CHROMATISME**
LEUCHTMODUL MIT KORREKTUR DER CHROMATISCHEN ABRÄSION
LIGHT MODULE WITH CHROMATISM CORRECTION

(30) Priorité: 21.03.2017 FR 1752313
(43) Date de publication de la demande: 26.09.2018
(73) Titulaire: Valeo Vision, 93012 Bobigny Cedex (FR)
(72) Inventeur: LEFAUDEUX, Nicolas, 93012 Bobigny Cedex (FR); DE LAMBERTERIE, Antoine, 93012 Bobigny Cedex (FR); THIN, Guillaume, 93012 Bobigny Cedex (FR); MBATA, Samira, 93012 Bobigny Cedex (FR); CANONNE, Thomas, 93012 Bobigny Cedex (FR); HOANG, Van-Thai, 93012 Bobigny Cedex (FR); DUBOIS, Vincent, 93012 Bobigny Cedex (FR); AMIEL, François-Xavier, 93012 Bobigny Cedex (FR)
(74) Mandataire: Valeo Visibility

(56) Documents cités:
- EP-A1- 1 980 787
- EP-A1- 2 372 236
- EP-A2- 1 500 871
- EP-A2- 1 584 863
- EP-A2- 1 637 797
- EP-A2- 2 578 929
- EP-A2- 2 690 348
- DE-A1- 102007 014 676
- DE-A1- 102008 005 488
- DE-A1- 102014 112 937
- FR-A1- 2 815 425
- JP-A- 2014 175 198

## Description

### DOMAINE DE L'INVENTION

L'invention se rapporte au domaine des dispositifs lumineux de véhicule automobile, c'est-à-dire des dispositifs d'éclairage avant et arrière, permettant de projeter un faisceau lumineux pour éclairer la route. Les feux de croisement et/ou de routes sont des exemples de tels dispositifs lumineux. L'invention porte plus précisément sur les modules lumineux constitutifs des dispositifs lumineux.

### ARRIERE-PLAN

La projection d'un faisceau lumineux par un dispositif lumineux de véhicule automobile, tels que des projecteurs avants ou feux arrières, permet classiquement d'éclairer la route avec un éclairage global et ainsi d'augmenter la visibilité en cas d'obscurité, par exemple de nuit. Cela permet une conduite sécurisée du véhicule. Ces dispositifs lumineux peuvent comprendre un ou plusieurs modules lumineux. Les documents EP 2 372 236 A1, DE 10 2007 014 676 A1 et JP 2014-175198 A divulguent différents modules lumineux pour véhicule automobile.

La règlementation impose que les faisceaux lumineux projetés par les modules lumineux comportent une coupure pour ne pas éblouir les autres usagers. Cette coupure, qui se matérialise sous la forme d'une « ligne de coupure », crée une zone de transition entre une zone éclairée et une zone sombre. La forme de la ligne de coupure est généralement soumise à une règlementation, par exemple la règlementation ECE n°48 en Europe ou la réglementation FMVSS 108 aux États-Unis d'Amérique.

Lors de la projection d'un faisceau lumineux à ligne de coupure par un module lumineux classique, on observe une coloration au niveau de la zone de transition. Cette observation résulte du phénomène de dispersion chromatique de la lumière et de la nature dispersive des composants optiques intégrés dans le module lumineux. En pratique, la principale conséquence de ce phénomène est que les phares projetant un faisceau de lumière blanche apparaissent bleus pour les autres usagers ; ce phénomène est appelé chromatisme. En outre, ce chromatisme s'avère gênant pour les conducteurs.

Une solution connue est d'utiliser par exemple un système achromatique composé d'éléments diffractifs circulaires concentriques. Ces éléments diffractifs permettent la correction du chromatisme de la ligne de coupure selon plusieurs directions. Néanmoins, cette solution nécessite une quantité importante d'éléments diffractifs, c'est-à-dire qu'une grande partie de la lentille doit ainsi être recouverte par ces éléments diffractifs. Ainsi, un module lumineux comprenant une lentille avec de tels éléments diffractifs circulaires concentriques présente une efficacité de diffraction limitée qui résulte en une perte et une diffusion de la lumière de la source lumineuse. De plus, les éléments diffractifs concentriques font apparaitre des tâches de diffraction due aux autres ordres de diffraction dans la zone sombre : ces tâches sont gênantes, notamment pour les autres usagers. En outre, plus la quantité d'éléments diffractifs est importante, plus le système est complexe à fabriquer, ce qui augmente son coût de fabrication.

Dans ce contexte, il existe un besoin pour améliorer la projection d'un faisceau lumineux à ligne de coupure et faciliter la fabrication de l'élément diffractif.

### RESUME DE L'INVENTION

A cette fin, il est proposé un module lumineux pour véhicule automobile avec les caractéristiques de la revendication 1.

Selon différents exemples, le dispositif lumineux peut comprendre l'une ou plusieurs des caractéristiques suivantes combinées entre elles :
- les éléments diffractifs sont positionnés sur au moins un bord entourant ladite zone centrale de ladite au moins une lentille ;
- la zone centrale s'étend de sorte qu'un angle de dispersion chromatique de la lumière émise par le moteur lumineux en sortie de la zone centrale est inférieur ou égal à la moitié d'un angle de la transition de la ligne de coupure ;
- l'angle de la transition de la ligne de coupure est compris entre 0,1° et 3° bornes incluses, de préférence entre 0,25° et 0,3° bornes incluses ;
- les éléments diffractifs sont sensiblement parallèles à la ligne de coupure ;
- les éléments diffractifs sont agencés pour former des lignes d'éléments diffractifs, les lignes d'éléments diffractifs étant sensiblement rectilignes et parallèles entre elles ;
- les distances séparant deux lignes d'éléments diffractifs successives sont identiques ;
- la distance entre deux lignes d'éléments diffractifs successives dépend de la position des deux lignes d'éléments diffractifs successives par rapport à la zone centrale ;
- la distance entre deux lignes d'éléments diffractifs successives est calculée en fonction de la matière et de la forme de la lentille ;
- les éléments diffractifs sont positionnés sur un dioptre d'entrée ou un dioptre de sortie de ladite au moins une lentille ;
- la zone centrale a une puissance optique cylindrique ;
- un film comprend les éléments diffractifs et est posé sur ladite au moins une lentille ;
- le film est obtenu par un procédé de laminage ;
- lesdites une ou plusieurs sources lumineuses sont des sources électroluminescentes.

Il est également proposé un dispositif lumineux comprenant au moins un module lumineux. Le dispositif lumineux peut exécuter une fonction choisie parmi une fonction de feu de croisement, une fonction de feu de route, une fonction de feu de brouillard.

### BREVE DESCRIPTION DES FIGURES

Différents modes de réalisation de l'invention vont maintenant être décrits, à titre d'exemples nullement limitatifs, en se référant aux dessins annexés dans lesquels :
- FIG. 1 illustre un premier exemple de module lumineux selon l'invention ;
- FIG. 2 illustre un exemple de lentille avec des éléments de diffraction selon l'invention ;
- FIG. 3 illustre un exemple d'image projetée d'un faisceau lumineux à ligne de coupure ;
- FIG. 4 illustre schématiquement un exemple du phénomène de dispersion chromatique ;
- FIG. 5 illustre schématiquement un exemple du phénomène de dispersion chromatique localisé sur la ligne de coupure du faisceau lumineux à ligne de coupure illustré sur la FIG. 2 ;
- FIG. 6 illustre schématiquement un exemple de l'effet de la réduction de l'angle de dispersion chromatique sur le phénomène de dispersion chromatique visible sur la FIG. 5 ;
- FIG. 7 illustre un exemple de motif de diffraction selon l'invention ;
- FIG. 8 illustre un autre exemple de motif de diffraction selon l'invention ;
- FIG. 9 illustre un autre exemple de motif de diffraction selon l'invention ;
- FIG. 10 illustre un exemple de module lumineux selon l'invention comportant des éléments diffractifs sur le dioptre de sortie de la lentille ;
- FIG. 11 illustre un exemple de module lumineux selon l'invention comportant des éléments diffractifs sur le dioptre d'entrée de la lentille ;
- FIG. 12 illustre un exemple de module lumineux selon l'invention.

### DESCRIPTION DETAILLEE

On propose un module lumineux pour véhicule automobile, ainsi qu'un dispositif lumineux comprenant une ou plusieurs versions d'un tel module lumineux. Ce dispositif lumineux projette un faisceau lumineux sur une scène. La scène ou « scène de route » est l'environnement du véhicule susceptible d'être éclairé par le dispositif lumineux. Un tel dispositif lumineux est apte à exécuter les fonctions de feu de croisement et/ou de feu de route et/ou de feu de brouillard.

Le module lumineux selon l'invention est adapté aux véhicules automobiles pouvant être tout type de véhicule terrestre, par exemple une automobile voiture, une motocyclette, ou un camion. Le véhicule peut être équipé d'un ou plusieurs projecteurs avant et/ou d'un ou plusieurs projecteurs arrière. L'un ou plusieurs des projecteurs avant et/ou arrière peuvent comprendre chacun un ou plusieurs dispositifs lumineux configurés chacun pour projeter un faisceau lumineux.

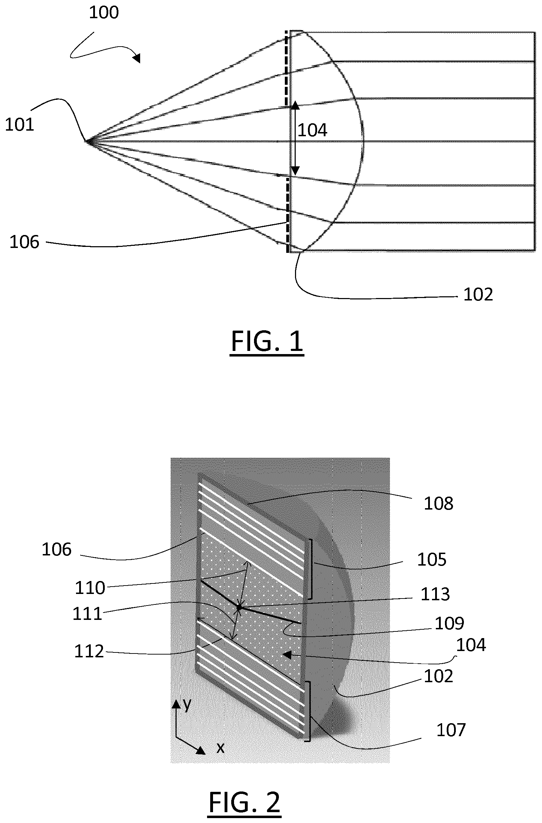

La FIG. 1 illustre un exemple de module lumineux selon l'invention. Le module lumineux 100 est composé d'au moins un moteur lumineux, d'au moins une lentille 102, de plusieurs éléments diffractifs 106 positionnés sur la lentille de telle sorte qu'ils laissent apparaitre une zone centrale 104 dépourvue d'élément diffractifs.

Le module lumineux 100 comprend une ou plusieurs sources lumineuses 101 qui émettent des rayons lumineux, par exemple de la lumière blanche. Les sources lumineuses peuvent être des sources lumineuses à filament, à plasma, ou encore à gaz. Les sources lumineuses peuvent également être des sources électroluminescentes acronyme de l'anglais « solid-state lighting » qui comprennent des éléments électroluminescents. Les éléments électroluminescents sont situés sur un même substrat, et de préférence sur une même face du substrat qui peut être par exemple du saphir ou encore du silicium. Les éléments électroluminescents sont déposés sur ou s'étendent à partir au moins une face du substrat. Un élément électroluminescent peut-être, mais n'est pas limité à, une diode électroluminescente LED, une diode électroluminescente organique OLED, une diode électroluminescente polymérique PLED. Ainsi, on comprend que toute source lumineuse répondant aux éventuelles contraintes règlementaires du domaine automobile et apte à émettre des rayons lumineux peut être utilisée.

La ou les sources lumineuses comprises dans le module lumineux selon l'invention sont des éléments d'un moteur lumineux. Un moteur lumineux est un dispositif connu qui forme un faisceau lumineux à ligne de coupure. Il peut ainsi comprendre une ou plusieurs sources lumineuses, un réflecteur et une plieuse. La plieuse permet de former une ligne de coupure qui respecte les contraintes règlementaires, comme connu dans l'art. Le réflecteur comprend un ou plusieurs miroirs et permet de modifier, par réflexion, la répartition spatiale du rayonnement de la ou les sources lumineuses de sorte à créer un faisceau lumineux. De manière générale, le module lumineux selon l'invention comprend au moins un moteur lumineux.

Le module lumineux 100 comprend également une ou plusieurs lentilles 102. Les une ou plusieurs lentilles forment un système optique et elles orientent les rayons lumineux émis par le moteur lumineux de telle sorte à obtenir en sortie du module lumineux un faisceau lumineux, e.g. un faisceau lumineux pour éclairer la scène dans laquelle évolue un véhicule automobile qui comporterait le module lumineux. Une lentille est un milieu transparent limité par des dioptres (par exemple un dioptre d'entré et un dioptre de sortie) qui peuvent être par exemple plans, convexes, ou concaves. Le terme dioptre désigne les surfaces séparant le milieu de la lentille, par exemple le verre, avec le milieu dans lequel se trouve la lentille, par exemple l'air. La terminologie « dioptre d'entrée » désigne le premier dioptre d'une lentille rencontré par les rayons lumineux qui vont traverser cette lentille. Par analogie, le « dioptre de sortie » désigne le dernier dioptre d'une lentille rencontré par les rayons lumineux qui ont traversé cette lentille. Comme illustré sur la FIG. 1, le module lumineux comprend de préférence au moins une lentille comportant un dioptre d'entrée plan et un dioptre de sortie bombé. On comprend que la ou les lentilles du module lumineux selon l'invention ne sont pas limitées à cet exemple. De manière générale, les lentilles du module lumineux sont des lentilles optiques connues, notamment dans le domaine de l'automobile. Une ou plusieurs de ces lentilles comprennent des éléments diffractifs et les lentilles qui comprennent des éléments diffractifs ont une zone centrale qui est dépourvue d'éléments diffractifs.

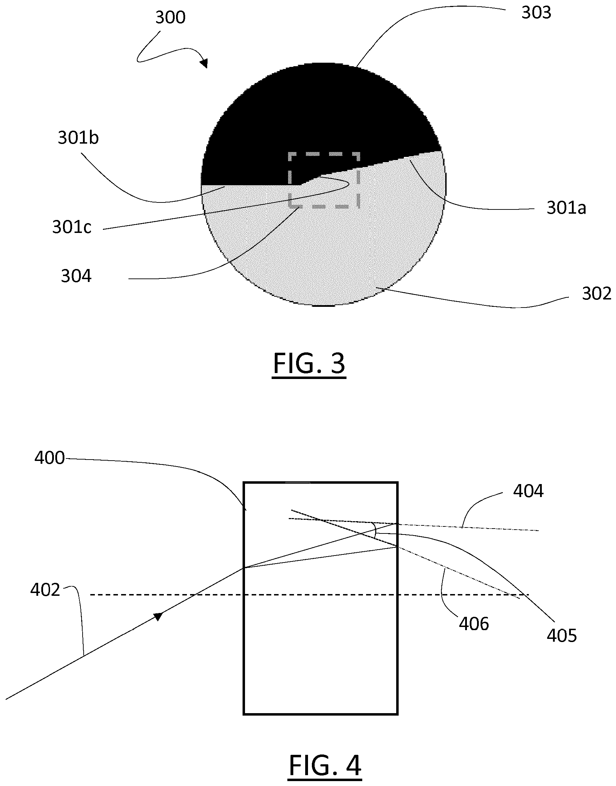

La ou les lentilles du module lumineux sont aptes à projeter un faisceau lumineux à ligne de coupure sur la scène. Un exemple d'image projetée d'un faisceau lumineux à ligne de coupure 300 est illustré sur le FIG. 3. Un faisceau lumineux à ligne de coupure comprend une « ligne de coupure » 301. Différents moyens peuvent être employés pour former la ligne de coupure qui est une image de ces moyens. Par exemple, la ligne de coupure peut résulter d'un cache positionné devant la ou les sources lumineuses du module : dans ce cas, la ligne de coupure est l'image du cache. Dans cet exemple, c'est la plieuse du moteur lumineux qui limite la diffusion de la lumière émise par la ou les sources lumineuses, comprises elles aussi dans le moteur lumineux, dans une zone déterminée de la scène. La ligne de coupure peut également résulter, dans le cas d'une ou de sources lumineuses pixélisées, de l'extinction de certains pixels : dans ce cas, la ligne de coupure est l'image de la *figure* formée par les pixels allumés. La ligne de coupure marque une séparation entre une zone éclairée 302 d'une part et une zone sombre 303 d'autre part. L'utilisation d'un faisceau lumineux à ligne de coupure permet d'éviter l'éblouissement d'un autre usager ou du conducteur, par exemple un véhicule venant de face. Comme illustré sur la FIG. 3, la ligne de coupure peut s'étendre suivant un ou plusieurs axes. Selon la règlementation, la ligne de coupure s'étend selon deux axes, et a une forme d'une ligne brisée. Dans l'exemple de la FIG. 3, la ligne de coupure s'étend selon les deux axes 301a et 301b. L'orientation de ces axes peut être identique ou différente. Si leur orientation est identique, les deux axes peuvent être confondus ou bien parallèles entre eux. Si au contraire leur orientation est différente, alors la ligne de coupure comprend un angle formé par l'intersection de ces deux axes. Ce dernier cas est illustré sur la FIG. 3. La ligne de coupure est de préférence horizontale à gauche lorsque le sens de circulation est à gauche et forme un angle de 15° à droite par rapport à l'horizontale pour avoir une meilleure visibilité des bas-côtés ; inversement lorsque le sens de circulation est à droite. Ici, l'axe horizontal désigne un axe parallèle à l'horizon de la scène dans un plan de l'image projetée. Cet axe horizontal peut être également défini comme étant orthogonal à un axe perpendiculaire à un support plan sur lequel est disposé le module lumineux. La ligne de coupure est quasiment identique pour les phares avant gauche et droit. En revanche la ligne de coupure varie selon que le sens de circulation est à droite ou à gauche. La ligne de coupure peut également varier selon les pays et leurs législations locales.

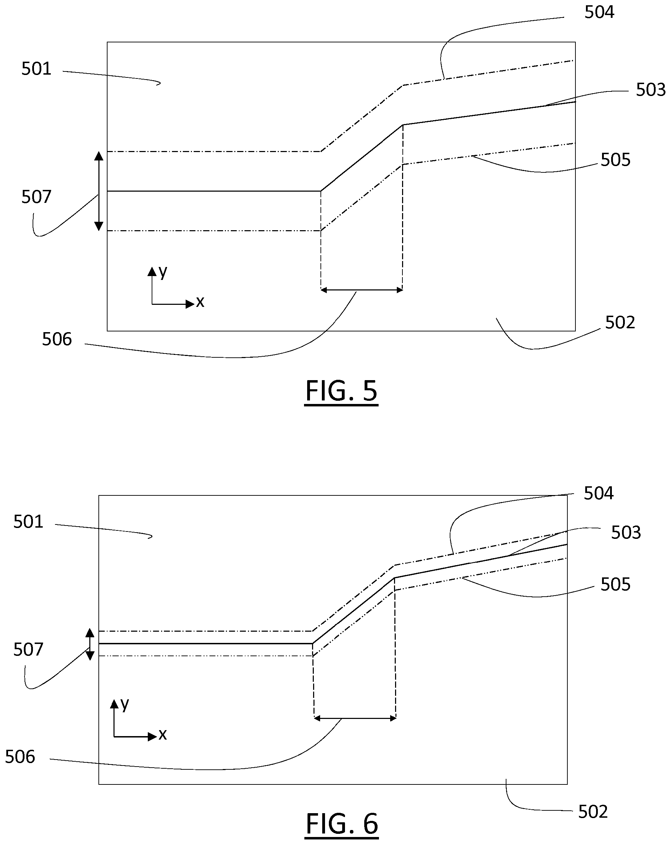

Toujours dans l'exemple de la FIG. 3, la ligne de coupure s'étend selon les deux axes principaux 301a et 301b d'inclinaison différente : l'axe 301b est horizontal et l'axe 301a forme un angle avec l'axe 301b. De plus, on observe au niveau de la zone où se croisent les deux axes 301a et 301b (304, zone encadrée sur la FIG. 3) que le raccordement entre les deux axes est réalisé par l'intermédiaire d'un troisième axe ou segment 301c. Le segment 301c crée un coude sur la ligne de coupure qui permet de passer progressivement du premier axe principal vers le deuxième axe principal. Ce coude est également connu sous le terme anglais « kink ». La distance séparant les deux axes principaux, est appelé le taux de transition ou encore angle de transition. La FIG. 5 représente un agrandissement de la zone encadrée sur la FIG. 3. La ligne de coupure 503 s'étend selon deux axes principaux, et comprend trois segments. La distance 506, séparant les deux axes principaux 504 et 505, est le taux de transition ou encore angle de transition.

Ainsi, lorsqu'une ligne de coupure s'étend suivant deux axes, comme les exemples des FIGs. 3 et 5, la ligne de coupure prend la forme d'une ligne brisée composée de trois segments, par exemple. En pratique, l'angle de transition de la ligne de coupure est fixé par la règlementation automobile, et peut prendre une valeur dans l'intervalle entre 0,1° et 3°, bornes incluses. Ces valeurs sont exprimées en degrés. Il peut exister des cas complexes, hors règlementation, dans lesquels la ligne de coupure s'étend selon plus de deux axes. Dans ce cas, plusieurs angles de transition sont présents, au niveau de chaque changement de direction de la ligne de coupure. Un angle de transition est défini par un gradient, qui correspond au maximum du ratio entre la dérivée de l'intensité lumineuse et l'intensité lumineuse selon une coupe verticale ; la coupe verticale peut être une coupe perpendiculaire à l'axe horizontal. La valeur de ce gradient est soumise à une réglementation qui indique une plage de valeurs autorisées.

On observe, sur l'image projetée d'un faisceau lumineux à ligne de coupure, un chromatisme de la ligne de coupure. Cela signifie que la transition entre la zone éclairée et la zone sombre apparait colorée. Le chromatisme de la ligne de coupure résulte du phénomène connu de dispersion.

Le phénomène de dispersion est un phénomène observable pour tous les milieux transparents, à l'exception du vide. Ce phénomène est illustré sur la FIG. 4 et est maintenant discuté. Lorsqu'un rayon incident de lumière polychromatique 402 traverse un milieu transparent 400 autre que le vide, les longueurs d'ondes constitutives du rayon incident se propagent à des vitesses différentes dans le milieu transparent. Cette différence de vitesse de propagation est observable par une déviation différente des rayons transmis des longueurs d'ondes composant le rayon incident, par exemple les rayons 404 et 406. Ainsi, le phénomène de dispersion est caractérisable par l'angle 405 formé par les rayons transmis 404, 406 des deux longueurs d'ondes extrêmes du rayon incident 402 de lumière polychromatique. Cela signifie que l'angle 405 est l'angle entre le rayon transmis de la plus petite longueur d'onde et le rayon transmis de la plus grande longueur d'onde de la lumière polychromatique incidente. Par conséquent, pour chaque rayon émis par une source lumineuse polychromatique, on observe un angle entre les rayons transmis des deux longueurs d'ondes extrêmes composant le rayon incident, en sortie du milieu transparent. Les angles observés pour tous les rayons incidents issus d'une même source lumineuse polychromatique ne sont pas nécessairement égaux : par exemple dans le cas d'une lentille, l'angle de dispersion est quasi nul pour les rayons incidents proche de l'axe optique, et augmente à mesure que les rayons incidents sont éloignés de l'axe optique. On appelle par la suite angle de dispersion chromatique l'angle maximum observé en sortie d'un milieu transparent pour tous les rayons incidents issus d'une même source polychromatique. L'angle de dispersion chromatique est exprimé en degrés. Dans le cas de la lumière blanche, l'angle de dispersion chromatique 405 est le plus grand angle entre le rayon rouge transmis 404 et le rayon bleue transmis 405. Le phénomène de dispersion dépend du milieu transparent considéré, c'est-à-dire de sa matière et de sa forme.

Ainsi, le phénomène de dispersion d'une lumière passant à travers une lentille dépend du spectre composant la lumière, de la matière et de la forme des lentilles. En effet, le phénomène de dispersion implique nécessairement une lumière incidente polychromatique : dans le domaine de l'automobile, la ou les sources lumineuses émettent en général une lumière blanche. De plus, l'angle de dispersion chromatique dépend de la forme de la lentille qui peut être par exemple convexe, concave, ménisque, et de la matière de la lentille qui peut comprendre du verre, un polymère ou un cristal. Le phénomène de dispersion s'amplifie à mesure que les rayons lumineux incidents sont proches des bords de la lentille. En pratique, on observe que plus on s'éloigne de l'axe optique, et donc plus on se rapproche des bords de la lentille, plus le phénomène de dispersion est visible. Par exemple, le bord d'une lentille est la surface 108 représentée sur la FIG. 2.

Le chromatisme de la ligne de coupure est schématisé sur la FIG. 5, qui correspond à l'agrandissement de la zone 304 de la FIG. 3. Comme expliqué précédemment, la ligne de coupure 503 marque une séparation entre une zone éclairée 501 et une zone sombre 502. La transition entre la zone sombre 501 et la zone éclairée 502 est progressive : une zone de transition 507 est observable dans laquelle on passe graduellement de la zone illuminée vers la zone sombre. Cette zone est délimitée par les images 504 et 505 du moyen permettant de former de la ligne de coupure, par exemple un cache. Ces images 504 et 505 sont respectivement :
- l'image projetée du moyen permettant de former la ligne de coupure par les rayons de longueur d'onde la plus faible 504 de la lumière incidente émise par la ou les sources lumineuses du module lumineux. Dans le cas d'une source lumineuse émettant de la lumière blanche, il s'agit de l'image de la ligne de coupure par les rayons bleus. Dans ce cas, cette image est par conséquent bleue.
- l'image projetée du moyen permettant de former la ligne de coupure par les rayons de longueur d'onde la plus élevée 505 de la lumière incidente émise par la ou les sources lumineuses du module lumineux. Dans le cas d'une source lumineuse émettant de la lumière blanche, il s'agit de l'image de la ligne de coupure par les rayons rouges. Dans ce cas, cette image est par conséquent rouge.

Sans le phénomène de dispersion discuté précédemment, les deux images 504 et 506 de la ligne de coupure auraient été superposées. L'image issue des rayons bleus est en général la plus visible, et elle est à l'origine la perception par les autres usagers de la teinte bleue dans la lumière émise par les phares.

Le chromatisme de la ligne de coupure, issu du phénomène de dispersion, se déroule suivant toutes les directions et est donc observable selon plusieurs directions. Les modules lumineux de l'art antérieur soit ne corrigent pas le chromatisme de la ligne de coupure soit corrigent le chromatisme de la ligne de coupure de manière équivalente selon toutes ces directions.

Pour réduire ce phénomène, le module lumineux selon l'invention comprend des éléments diffractifs 106 positionnés sur au moins une des lentilles 102. Les éléments diffractifs sont des figures, telles que des marques transparentes en relief. Ces éléments diffractifs sont positionnés sur au moins une des lentilles du module lumineux, c'est-à-dire qu'ils sont disposés sur le dioptre d'entrée d'au moins une lentille, et/ou sur son dioptre de sortie. Le positionnement des éléments diffractifs est réalisé de manière à ne corriger le chromatisme que selon une direction sensiblement unique. En effet, le chromatisme n'est visible et gênant pour le conducteur et les autres usagers que lorsqu'il se propage selon un axe qui est noté axe y. Cet axe y est identifié sur la FIG. 5 qui montre une direction horizontale x qui est parallèle à l'horizon et une direction verticale y, orthogonale à la direction horizontale x, identifié sur la FIG. 5. Comme expliqué précédemment, la zone 507 est la zone de transition dans laquelle on passe graduellement de la zone illuminée vers la zone sombre, et c'est dans cette zone que le chromatisme est visible. La zone 507 et le chromatisme gênant pour le conducteur s'étendent donc selon cette direction y. Le référentiel composé de l'axe x et de l'axe y qui est l'axe perpendiculaire à x de manière à former un référentiel direct avec x, est le référentiel lié au module lumineux. Ce référentiel est utilisé pour la suite de la description.

Le module lumineux comprend également une zone centrale 104 sur la ou les lentilles. Cette zone centrale est dépourvue d'éléments diffractifs. Selon l'invention, la zone centrale s' étend de part et d'autre et le long de la projection suivant l'axe optique de la ligne de coupure sur un des dioptres d'une de(des) lentille(s) du module lumineux selon l'invention. La projection de la ligne de coupure sur un des dioptres de la lentille est l'image formée par la ligne de coupure sur un des dioptres de la lentille. La FIG. 2 montre un exemple de projection de la ligne de coupure 109 du faisceau lumineux par projection sur le dioptre d'entrée de la lentille 102. Cet exemple de zone centrale 104 s'étend de part et d'autre de la projection de la ligne de coupure 109 sur le dioptre d'entrée de la lentille 102 : cela signifie que la zone centrale peut inclut inclure la projection de la ligne de coupure, et que les limites de cette zone sont à des distances (non nulles) de cette projection. Les distances, notées 110 et 111 sur la FIG. 2, sont les distances entre les limites de la zone centrale et l'intersection 113 des projections deux axes composant la ligne de coupure. Dans le cas complexe où la ligne de coupure s'étend selon plus de deux axes, toutes les projections des intersections des axes de la coupure se situent à une distance non nulle des limites de la zone centrale. Dans le cas où la ligne de coupure s'étend selon des axes confondus ou parallèles, les deux axes se situent à des distances non nulles des limites de la zone centrale. La somme de ces deux distances 110, 111 forme une hauteur h de la zone centrale. La hauteur est définie par rapport à l'axe x. Cette zone s' étend également le long de l'image de la ligne de coupure : cela signifie, comme illustré sur la FIG. 2, la zone centrale inclut intégralement la projection de la ligne de coupure sur le dioptre de la lentille 102. Dans l'exemple de la FIG. 2, la zone centrale s'étend donc selon la direction horizontale (axe x) avec une distance 112, et selon une direction verticale (axe y) selon au moins une distance 110, 111. Cette zone centrale permet de limiter la quantité d'éléments diffractifs devant être placés sur la lentille 102. Par conséquent, l'intensité en sortie du module lumineux est augmentée.

La zone centrale est dimensionnée de telle sorte que le chromatisme de la ligne de coupure ne soit pas visible. En effet, comme expliqué précédemment, le phénomène de dispersion est faible près de l'axe optique et augmente à mesure que les rayons incidents sont proches des bords de la lentille. Ainsi, si on sélectionne une zone centrale (comprenant l'axe optique), suffisamment petite, le phénomène de dispersion, et donc l'angle de dispersion chromatique de cette zone, est tellement faible, qu'il n'est pas visible par le conducteur ou les autres usagers. Afin d'augmenter l'intensité lumineuse en sortie du module lumineux selon l'invention, la zone centrale est de préférence dimensionnée la plus grande possible, étant entendu que la zone centrale est dimensionnée de sorte qu'elle permet d'obtenir une coupure chromatique dont le chromatisme ne peut être distingué à l'œil nu. En d'autres termes, la taille de zone centrale est dimensionnée de telle sorte que l'angle de dispersion chromatique de la zone centrale ne soit pas visible. De cette façon, l'intensité de sortie est maximisée.

Dans ce but, la zone centrale peut avantageusement être dimensionnée de telle sorte que l'angle de dispersion chromatique de la zone centrale est inférieur ou égal à la moitié de l'angle de transition de la coupure chromatique. Ceci est illustré par la FIG. 6, qui schématise l'influence de la variation de l'angle de dispersion chromatique de la zone centrale ; l'angle de transition est le même que celui sur la FIG. 5. Comme sur la FIG. 5, on retrouve sur la FIG. 6 la ligne de coupure 503 caractérisée par un angle de transition 506, séparant une zone éclairée 501 d'une zone sombre 502, et la zone 507 autour de la ligne de coupure, où le chromatisme est observable. Sans modifier aucun autre paramètre, la réduction de l'angle de dispersion de la zone centrale (c'est-à-dire la réduction de la taille de la zone centrale), permet de réduire la taille de la zone colorée 507, transition de la zone sombre à la zone éclairée. La réduction de l'angle de dispersion de la zone centrale est obtenue en diminuant au moins une des distances 110 et 111 illustrées sur la FIG. 2, c'est-à-dire que la hauteur de la zone centrale (par rapport à l'axe y) est diminuée. La réduction de l'angle de dispersion chromatique de la zone centrale permet de réduire la visibilité du chromatisme de la ligne de coupure par les conducteurs et les autres usagers. En pratique, lorsque l'angle de dispersion chromatique de la zone centrale est inférieur ou égal à la moitié l'angle de transition de la coupure, le chromatisme de la coupure projetée n'est plus visible. L'angle de transition de la coupure 506 peut prendre une valeur comprise entre 0,1° et 3° (degrés) selon la règlementation, bornes incluses, et de préférence entre 0,25° et 0,3°, bornes incluses.

Différents exemples du positionnement des éléments diffractifs utilisés dans le module lumineux sont maintenant discutés en référence des FIG. 2 et FIG. 7-10.

Dans l'exemple représentée en FIG. 2, la lentille 102 comporte deux dioptres ; un premier dioptre est plan et le second dioptre est convexe. Des éléments diffractifs 106 sont disposés sur le dioptre plan de telle sorte qu'une zone centrale 104 est dépourvue d'éléments diffractifs. Les éléments diffractifs sont donc disposés dans les zones 107 et 105, et délimitent la zone centrale 104. Ainsi, les éléments diffractifs peuvent être positionnés sur au moins un bord entourant ladite zone centrale. Les éléments diffractifs sont disposés de manière à être sensiblement parallèles à la coupure. Cela signifie que l'inclinaison des éléments diffractifs par rapport à la ligne de coupure est ainsi inférieure ou égale à 25°, et de préférence inférieure ou égale à 18°. Par exemple, lorsque l'inclinaison des éléments diffractifs est de 18°, alors le chromatisme vertical est corrigé (c'est-à-dire 100% du chromatisme vertical), et l'inclinaison des éléments diffractifs permet dans cet exemple une correction supplémentaire de 25% du chromatisme horizontal. Dans le cas où la coupure s'étend suivant un ou plusieurs axes, comme c'est par exemple le cas sur la FIG. 2, les éléments diffractifs sont disposés de manière sensiblement parallèle par rapport à un axe de ces axes suivant lesquels la coupure s'étend. Par exemple, lorsque la ligne de coupure comprend un segment horizontal (selon l'axe x sur la FIG ; 2), les éléments diffractifs sont disposés sensiblement parallèles selon cet axe horizontal. Une telle disposition des éléments diffractifs permet une correction du chromatisme de la coupure projetée selon la direction verticale (axe y sur la FIG. 2) précédemment mentionnée. Cela permet de corriger uniquement le chromatisme gênant pour les autres usagers et le conducteur : cette correction est ainsi adaptée aux dispositifs lumineux de véhicules automobiles. De plus, la zone centrale s'étendant le long de la coupure, une plus grande surface de la lentille ne comporte pas d'élément diffractifs, ce qui accroit l'intensité lumineuse en sortie de la lentille et facilite la réalisation.

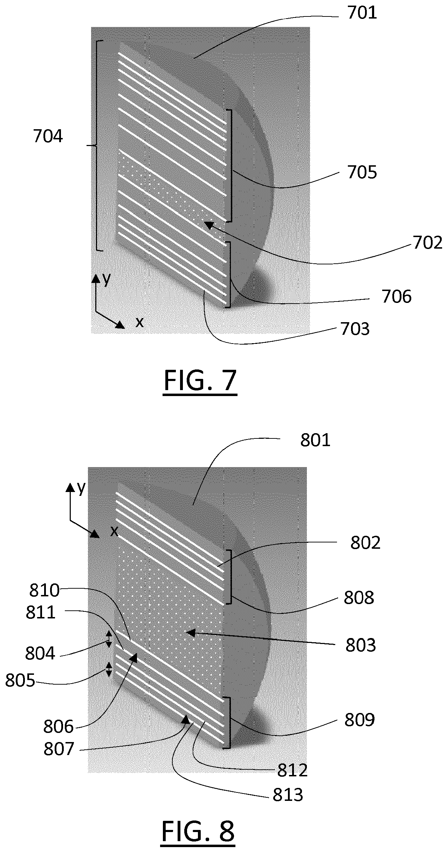

Dans l'exemple représenté sur la FIG. 7, la lentille 701 porte des éléments diffractifs agencés de telle sorte à former des lignes d'éléments diffractifs 703. Les lignes d'éléments diffractifs sont disposées dans les zones 705 et 706, qui délimitent la zone centrale 702 dépourvue d'éléments diffractifs. La zone centrale 702 est représentée sur la FIG. 2 par les points blancs. La FIG. 7 illustre également la possibilité que la surface occupée par la zone centrale 702 puisse être de taille réduite par rapport à la taille optimale de la zone centrale, comme par exemple celle représentée sur la FIG. 2. Une ligne d'éléments diffractif comporte plusieurs éléments diffractifs qui sont alignés les uns par rapport aux autres. Ces lignes sont de préférence rectilignes, c'est-à-dire qu'elles ont une forme voisine à une partie d'une droite. Elles sont également sensiblement parallèles entre-elles : cela signifie que l'inclinaison des lignes éléments diffractifs des unes par rapport aux autres est inférieure à 18°. Les lignes d'éléments diffractifs peuvent avoir également une forme courbe, ou encore être en forme de vague pouvant être semblable à une forme sinusoïdale de faible amplitude. En tout état de cause, lorsque les lignes ne sont pas droites, leur forme doit permettre de corriger le chromatisme de la coupure selon la direction verticale (notée x sur la FIG. 7). La disposition de ces éléments diffractifs est appelée motif de diffraction 704. Le motif de diffraction est choisi selon le pouvoir dispersif des lentilles, et dépend donc de leurs formes et leurs matières. Dans le cas de la configuration représentée par la FIG. 7, le motif de diffraction permet de corriger le chromatisme de la coupure projetée selon la direction verticale (l'axe x) précédemment mentionnée. Cette correction est ainsi adaptée au chromatisme des dispositifs lumineux des véhicules automobiles, c'est-à-dire qu'elle est adaptée à correction du chromatisme selon l'axe vertical des faisceaux à ligne de coupure horizontale.

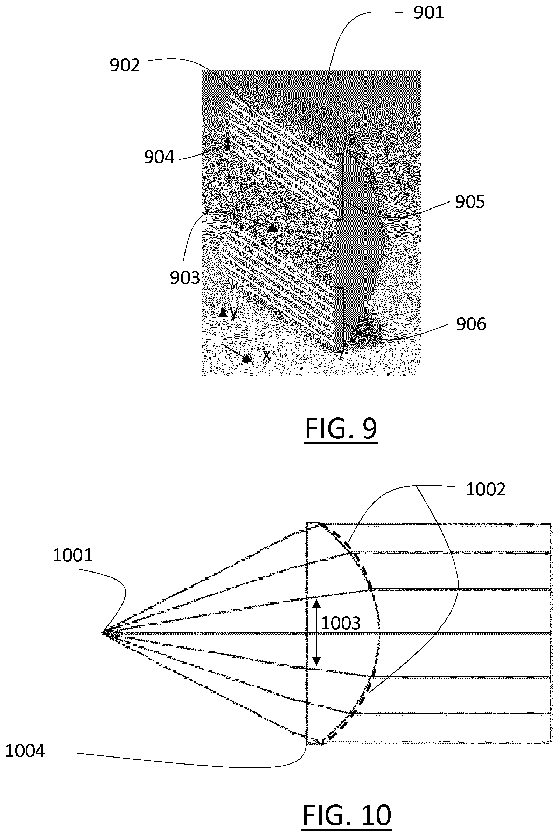

Le pouvoir de correction du chromatisme de la ligne de coupure par un motif de diffraction dépend des intervalles qui séparent les formes du motif de diffraction. L'efficacité de diffraction dépend de la forme du motif de diffraction, ainsi que de la hauteur des éléments diffractifs. L'efficacité de diffraction est une valeur qui traduit l'étendue de l'énergie de la lumière diffractée pouvant être obtenue par rapport à une énergie de lumière incidente. En d'autres termes, une faible efficacité de la diffraction se traduit par une perte et une diffusion de la lumière de la source lumineuse du module lumineux. Par hauteur des éléments diffractifs, on entend l'épaisseur de ces éléments selon un axe z, perpendiculaire aux axes x et y. Comme expliqué précédemment, les éléments diffractifs sont agencés de sorte à corriger le chromatisme de la ligne de coupure selon l'axe verticale. L'intervalle, aussi appelé le pas, séparant les formes des éléments diffractifs est la distance séparant deux formes successives d'éléments diffractifs. La FIG. 9 illustre l'utilisation de lignes comme motif de diffraction : les éléments diffractifs sont alignés et forment ainsi des lignes d'éléments diffractifs. Des lignes 902 d'éléments diffractifs sont disposées sur un dioptre de la lentille 901, plus précisément sur les zones 905 et 906 qui entourent la zone centrale 903 dépourvue d'éléments diffractifs. La distance entre les lignes successives d'éléments diffractifs 904, est dans cette exemple, la même pour toutes le lignes d'éléments diffractifs. Il est possible de fixer les pas 904 pour que le pouvoir de correction du motif de diffraction soit adapté à l'angle de dispersion chromatique des zones.

De manière générale, plus la distance entre les lignes d'éléments diffractifs est faible, c'est-à-dire plus le pas est faible, plus le pouvoir de correction sera adapté aux grands angles de dispersion. Comme évoqué plus tôt, le phénomène de dispersion est faible près de l'axe optique et s'accentue aux bords de la lentille. Dans les zones localisées près des bords de la lentille, l'angle de dispersion chromatique de ces zones est donc plus élevé que celui de la zone centrale : il est ainsi possible de faire varier la distance entre deux lignes successives d'éléments diffractifs de manière à ce que le pas corrige l'angle de dispersion chromatique de la zone délimitée par les lignes d'éléments diffractifs successives. Cet exemple est illustré par la FIG. 8.

La FIG. 8 illustre un exemple dans lequel les distances séparant deux lignes d'éléments diffractifs successives varient. Les lignes d'éléments diffractifs 802 sont disposées sur un dioptre de la lentille 801 de manière à ce que la zone centrale 803 soit dépourvue d'éléments diffractifs. La distance 804 est un pas proche de la zone centrale et la distance 805 est un pas proche des bords de la lentille. Une zone 806 est délimitée par les lignes d'éléments diffractifs successives 810 et 811 qui sont séparées par le pas 804. Cette zone 806 possède un angle de dispersion chromatique qui est inférieur à celui de la zone 807 délimitée par les lignes d'éléments diffractifs successives 812 et 813 séparées d'un pas 805. La proximité de la zone 807 des bords de la lentille cause cette différence. C'est en effet au niveau des bords de la lentille que le phénomène de dispersion chromatique est accentué. Le pas calculé pour la correction de l'angle de dispersion chromatique de la zone 806 est donc inférieur au pas calculé pour la correction de l'angle de dispersion chromatique de la zone 807. Le pas 804 est plus grand que le pas 805 : cela permet donc que le pas soit adapté à la correction du phénomène de dispersion de la zone 806 entre les lignes 810 et 811 qui est plus faible que dans la zone 807 délimitée par les lignes 812 et 813. Ainsi, dans cet exemple, le pas entre les lignes d'éléments diffractifs successives varie en fonction des angles de dispersion chromatique associés aux zones délimitées par ces lignes. La variation de la distance entre les lignes d'éléments successives augmente à mesure que les lignes d'éléments diffractifs sont proches de la zone centrale. L'augmentation de la distance entre les lignes d'éléments permet d'augmenter l'efficacité de diffraction, tout en assurant une correction adéquate du phénomène de dispersion. La variation du pas peut être la même dans les zones 808 et 809 où sont disposés les lignes d'éléments diffractifs et qui délimitent la zone centrale 803.

Les FIG. 10 à 12 illustrent des exemples dans lesquels les éléments diffractifs 1002, 1102 et 1202 peuvent être disposés sur le dioptre d'entrée ou sur le dioptre de sortie de la ou des lentilles du module lumineux.

La FIG. 10 illustre un exemple de module lumineux selon l'invention. Il est composé d'une source lumineuse 1001, d'une lentille 1004 qui comprend un dioptre d'entrée plan et un dioptre de sortie convexe. Des éléments diffractifs 1002 sont disposés en direction des bords du dioptre de sortie convexe, c'est-à-dire qu'une zone centrale 1003 est dépourvue d'éléments diffractifs. Ce mode de réalisation permet de réduire les pertes d'intensité liées aux éléments diffractifs. Ainsi, la disposition sur le dioptre de sortie convexe d'une lentille 1004 permet d'augmenter l'intensité lumineuse en sortie du module lumineux. Notamment, il est avantageux d'avoir les éléments diffractifs sur le dioptre de sortie car cela permet de maximiser l'intensité de lumière en sortie de la lentille.

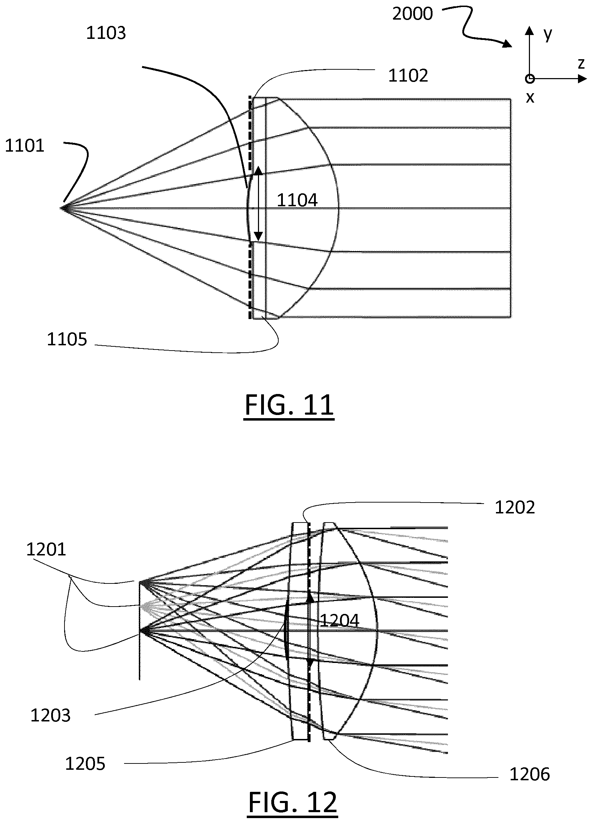

L'exemple de module lumineux de la FIG. 11 est composé d'une source lumineuse 1101, d'une lentille 1105 convexe avec un dioptre d'entrée plan, sur lequel des éléments diffractifs 1102 sont disposés de part et d'autre de la zone centrale 1104 qui est dépourvue d'éléments diffractifs. Dans cet exemple, la zone centrale 1104 sans éléments diffractifs possède une puissance optique cylindrique 1103. La puissance optique cylindrique désigne la puissance optique d'une lentille cylindrique. Une lentille cylindrique possède une puissance optique nulle selon la direction X et non nulle selon la direction Y du référentiel 2000. Pour cela, le dioptre est modifié au niveau de la zone centrale pour obtenir une puissance optique similaire à une puissance optique d'une lentille cylindrique. Comme illustré sur la FIG. 11, une courbure du dioptre peut être ajoutée au niveau de la zone centrale. Cette puissance optique cylindrique donnée par 1103 permet de réduire la différence de déviation des rayons passant par la zone centrale par rapport à ceux passant par les zones recouvertes d'éléments diffractifs. En effet, les éléments diffractifs disposés sur la lentille ou les lentilles du module dévient la trajectoire des rayons transmis par rapport aux rayons transmis en l'absence du diffractif.

L'ajout de puissance optique via la modification du dioptre d'entrée de la lentille pour réduire la différence de déviation introduite par les éléments diffractifs est compatible avec une disposition des éléments diffractifs sur le dioptre d'entrée ou de sortie d'une ou plusieurs lentilles du module lumineux. Par exemple, la FIG. 12 illustre une configuration dans laquelle le module lumineux comprend trois sources lumineuses 1201, un système optique comprenant deux lentilles 1205 et 1206. Les éléments diffractifs 1202 sont disposés sur le dioptre de sortie de la première lentille 1205, de telle sorte qu'une zone centrale 1204 est dépourvue d'éléments diffractifs. Une lentille convergente 1203 est disposée sur le dioptre d'entrée de la lentille 1204 sur laquelle les éléments diffractifs 1202 sont disposés. La lentille convergente 1203 est accolée à la lentille 1204 afin d'assurer la continuité de la déviation des rayons au niveau de la zone centrale 1204 dépourvue d'éléments diffractifs. La lentille 1206 reçoit les rayons lumineux de la lentille 1205 et forme le faisceau lumineux émis par le module lumineux.

Les éléments diffractifs peuvent être réalisés sur un film par procédé de laminage. Le film est une couche d'un matériau solide transparent. Le film peut être un film plastique transparent. On entend par matériau transparent tout matériau dont la transmission lumineuse est supérieure à 60%. Les éléments diffractifs, pouvant être des marques en reliefs, peuvent être réalisés par laminage, c'est-à-dire par la déformation plastique du film. Ainsi, plusieurs éléments diffractifs sont réalisés sur une portion de film, selon les différentes dispositions détaillées dans les modes de réalisation décrits précédemment. Le film, comprenant un des motifs de diffraction discutés, est posé sur une des lentilles du module lumineux. En d'autres termes, le film est appliqué sur la surface de la lentille, de manière à être fixé au dioptre de la lentille. Cette fixation peut se faire à l'aide d'une colle, par exemple une colle polymérisable qui se polymérise suite à l'exposition brève à une lumière UV. Le film peut être un film autocollant. Dans un même module, il est possible qu'un tel film, comprenant des motifs de diffractions identiques ou similaires, soit apposé sur plusieurs lentilles. Le procédé de laminage est particulièrement avantageux pour fabriquer des lignes d'éléments diffractifs. Notamment, lorsque le motif comprend des lignes, la fabrication d'un film tel que décrit précédemment est facilitée, à comparer par exemple de motifs de diffraction circulaires.

Les modules lumineux décrits sont intégrés à des dispositifs lumineux pouvant être utilisés comme feu de croisement, feu de route ou comme feu de brouillard. De tels dispositifs lumineux peuvent intégrer une ou plusieurs versions du module lumineux, c'est-à-dire conçus selon différents modes de réalisation.

## Revendications

1. Module lumineux (100) pour véhicule automobile comprenant :
- au moins un moteur lumineux (101) configuré pour former un faisceau lumineux à ligne de coupure, la ligne de coupure s'étendant suivant un ou plusieurs axes ;
- au moins une lentille (102) ayant une axe optique apte à projeter ledit faisceau lumineux à ligne de coupure, ladite au moins une lentille comprenant des éléments diffractifs (106) pour corriger tout ou partie du chromatisme de la lentille, et comprenant une zone centrale (104) qui est dépourvue desdits éléments diffractifs,
dans lequel la zone centrale s'étend de part et d'autre et le long d'une projection suivant l'axe optique de ladite ligne de coupure sur ladite au moins une lentille, **caractérisé en ce que** la zone centrale inclut la projection de la ligne de coupure, et les limites de cette zone étant à des distances non nulles de cette projection.

2. Module lumineux selon la revendication 1, dans lequel les éléments diffractifs (105, 107) sont positionnés sur au moins un bord (108) entourant ladite zone centrale de ladite au moins une lentille.

3. Module lumineux selon l'une des revendications 1 à 2, dans lequel la zone centrale s'étend de sorte qu'un angle de dispersion chromatique de la lumière émise par le moteur lumineux en sortie de la zone centrale est inférieur ou égal à la moitié d'un angle de la transition de la ligne de coupure.

4. Module lumineux selon la revendication 3, dans lequel l'angle de la transition de la ligne de coupure est compris entre 0,1° et 3° bornes incluses, de préférence entre 0,25° et 0,3° bornes incluses.

5. Module lumineux selon l'une des revendications précédentes, dans lequel les éléments diffractifs sont sensiblement parallèles à la ligne de coupure.

6. Module lumineux selon l'une des revendications précédentes, dans lequel les éléments diffractifs sont agencés pour former des lignes d'éléments diffractifs, les lignes d'éléments diffractifs étant sensiblement rectilignes et parallèles entre elles.

7. Module lumineux selon la revendication 6, dans lequel les distances séparant deux lignes d'éléments diffractifs successives sont identiques.

8. Module lumineux selon la revendication 6, dans lequel la distance entre deux lignes d'éléments diffractifs successives dépend de la position des deux lignes d'éléments diffractifs successives par rapport à la zone centrale.

9. Module lumineux selon l'une des revendications 7 ou 8, dans lequel la distance entre deux lignes d'éléments diffractifs successives est calculée en fonction de la matière et de la forme de la lentille.

10. Module lumineux selon l'une des revendications précédentes, dans lequel les éléments diffractifs sont positionnés sur un dioptre d'entrée ou un dioptre de sortie de ladite au moins une lentille.

11. Module lumineux selon l'une des revendications 1 à 10, dans lequel la zone centrale a une puissance optique cylindrique.

12. Module lumineux selon l'une des revendications précédentes, dans lequel un film comprend les éléments diffractifs et est posé sur ladite au moins une lentille.

13. Module lumineux selon la revendication 12, dans lequel le film est obtenu par un procédé de laminage.

14. Module lumineux selon l'une des revendications précédentes, dans lequel lesdites une ou plusieurs sources lumineuses sont des sources électroluminescentes.

15. Dispositif lumineux comprenant au moins un module lumineux selon l'une des revendications précédentes.

16. Dispositif lumineux selon la revendication 15, exécutant une fonction choisi parmi :
- une fonction de feu de croisement ;
- une fonction de feu de route ;
- une fonction de feu de brouillard.

## Patentansprüche

1. Leuchtmodul (100) für Kraftfahrzeuge umfassend :
- mindestens einen Lichtgenerator (101), der so konfiguriert ist, dass er einen Lichtstrahl mit einer Hell-Dunkel-Grenze bildet, wobei sich die Hell-Dunkel-Grenze entlang einer oder mehrerer Achsen erstreckt ;
- mindestens eine Linse (102) mit einer optischen Achse, die geeignet ist, den Lichtstrahl mit der Hell-Dunkel-Grenze zu projizieren, wobei die mindestens eine Linse diffraktive Elemente (106) umfasst, um den Chromatismus der Linse ganz oder teilweise zu korrigieren, und einen zentralen Bereich (104) umfasst, der frei von den diffraktiven Elementen ist,
wobei sich der zentrale Bereich zu beiden Seiten und entlang einer Projektion entlang der optischen Achse der Hell-Dunkel-Grenze auf die mindestens eine Linse erstreckt, **dadurch gekennzeichnet, dass** der zentrale Bereich die Projektion der Hell-Dunkel-Grenze einschließt und die Grenzen dieses Bereichs in ungleich Null Abständen von dieser Projektion liegen.

2. Leuchtmodul nach Anspruch 1, wobei die diffraktiven Elemente (105, 107) an mindestens einem Rand (108) positioniert sind, der den zentralen Bereich der mindestens einen Linse umgibt.

3. Leuchtmodul nach einem der Ansprüche 1 bis 2, wobei sich der zentrale Bereich so erstreckt, dass ein Winkel der chromatischen Streuung des von dem Lichtgenerator am Ausgang des zentralen Bereichs emittierten Lichts kleiner als oder gleich der Hälfte eines Winkels des Übergangs der Hell-Dunkel-Grenze ist.

4. Leuchtmodul nach Anspruch 3, wobei der Winkel des Übergangs der Hell-Dunkel-Grenze zwischen 0,1° und 3° einschließlich, vorzugsweise zwischen 0,25° und 0,3° einschließlich liegt.

5. Leuchtmodul nach einem der vorhergehenden Ansprüche, bei dem die diffraktiven Elemente im Wesentlichen parallel zur Hell-Dunkel-Grenze verlaufen.

6. Leuchtmodul nach einem der vorhergehenden Ansprüche, bei dem die diffraktiven Elemente so angeordnet sind, dass sie Linien von diffraktiven Elementen bilden, wobei die Linien von diffraktiven Elementen im Wesentlichen gerade und parallel zueinander sind.

7. Leuchtmodul nach Anspruch 6, bei dem die Abstände zwischen zwei aufeinanderfolgenden Linien von diffraktiven Elementen gleich sind.

8. Leuchtmodul nach Anspruch 6, wobei der Abstand zwischen zwei aufeinanderfolgenden Linien von diffraktiven Elementen von der Position der beiden aufeinanderfolgenden Linien von diffraktiven Elementen relativ zum zentralen Bereich abhängt.

9. Leuchtmodul nach einem der Ansprüche 7 oder 8, wobei der Abstand zwischen zwei aufeinanderfolgenden Linien von diffraktiven Elementen in Abhängigkeit von dem Material und der Form der Linse berechnet wird.

10. Leuchtmodul nach einem der vorhergehenden Ansprüche, wobei die diffraktiven Elemente auf einem Eingangsdiopter oder einem Ausgangsdiopter der mindestens einen Linse positioniert sind.

11. Leuchtmodul nach einem der Ansprüche 1 bis 10, wobei der zentrale Bereich eine zylindrische optische Stärke aufweist.

12. Leuchtmodul nach einem der vorhergehenden Ansprüche, bei dem eine Folie die diffraktiven Elemente umfasst und auf die mindestens eine Linse aufgebracht ist.

13. Leuchtmodul nach Anspruch 12, bei dem die Folie durch ein Laminierverfahren hergestellt wird.

14. Leuchtmodul nach einem der vorhergehenden Ansprüche, wobei die eine oder die mehreren Lichtquellen elektrolumineszente Lichtquellen sind.

15. Leuchtvorrichtung mit mindestens einem Leuchtmodul nach einem der vorhergehenden Ansprüche.

16. Leuchtvorrichtung nach Anspruch 15, die eine Funktion ausführt, die ausgewählt ist aus :
- eine Abblendlichtfunktion ;
- eine Fernlichtfunktion ;
- eine Nebelscheinwerferfunktion.

## Claims

1. Lighting module (100) for motor vehicle comprising:
- at least one lighting engine (101) configured for forming a light beam with a cut-off line, the cut-off line running along one or more axes;
- at least one lens (102) having an optical axis designed to project the said light beam with a cut-off line, the said at least one lens comprising diffractive elements (106) for correcting all or part of the chromatism of the lens, and comprising a central region (104) which is lacking the said diffractive elements,
in which the central region extends on either side of and along a projection along optical axis of the said cut-off line on the said at least one lens, **characterized in that** the central region includes the projection of the cut-off line, and the limits of this region being at non-zero distances from this projection.

2. Lighting module according to either of Claims 1, in which the diffractive elements (105, 107) are positioned on at least one edge (108) surrounding the said central region of the said at least one lens.

3. Lighting module according to either one of Claims 1 to 2, in which the central region extends such that chromatic dispersion angle of the light emitted by the lighting engine at the exit of the central region is less than or equal to half of an angle of the transition of the cut-off line.

4. Lighting module according to Claim 3, in which the angle of the transition of the cut-off line is in the range between 0.1° and 3° including boundaries, preferably between 0.25° and 0.3° including boundaries.

5. Lighting module according to one of the preceding claims, in which the diffractive elements are substantially parallel to the cut-off line.

6. Lighting module according to one of the preceding claims, in which the diffractive elements are arranged so as to form lines of diffractive elements, the lines of diffractive elements being substantially rectilinear and parallel to one another.

7. Lighting module according to Claim 6, in which the distances separating two successive lines of diffractive elements are identical.

8. Lighting module according to Claim 6, in which the distance between two successive lines of diffractive elements depends on the position of the two successive lines of diffractive elements with respect to the central region.

9. Lighting module according to one of Claims 7 or 8, in which the distance between two successive lines of diffractive elements is calculated as a function of the material and of the shape of the lens.

10. Lighting module according to one of the preceding claims, in which the diffractive elements are positioned on an entry optical interface or an exit optical interface of the said at least one lens.

11. Lighting module according to one of Claims 1 to 10, in which the central region has a cylindrical optical power.

12. Lighting module according to one of the preceding claims, in which a film comprises the diffractive elements and is placed onto the said at least one lens.

13. Lighting module according to Claim 12, in which the film is obtained by a lamination process.

14. Lighting module according to one of the preceding claims, in which the said one or more light sources are electroluminescent sources.

15. Lighting device comprising at least one lighting module according to one of the preceding claims.

16. Lighting device according to Claim 15, executing a function chosen from amongst:
- a low-beam function;
- a high-beam function;
- a fog beam function.
